# EUROPEAN PATENT APPLICATION

(11) **EP 1 138 469 A2**
(43) Date of publication of application: **04.10.2001**
(21) Application number: 01106911.9
(22) Date of filing: 20.03.2001
(51) Int. Cl.: B29C 70/58, B29B 17/00

(54) **Material for molded resin articles and molded resin article using the same**

(30) Priority: 30.03.2000 JP 2000092748
(71) Applicant: MODE CENTER COMPANY, LIMITED, TOKYO 170-0001 (JP); MODE KOHGEI COMPANY, LIMITED, FUJIMI-SHI, SAITAMA 354-0013 (JP)
(72) Inventor: Furuya, Susumu, c/o Mode Center Co., Ltd., Tokyo 170-0001 (JP); Yamamoto, Shinji, Fujimi-shi, Saitama 354-0013 (JP)
(74) Representative: Kehl, Günther, Dipl.-Phys.

(57) **Abstract**

A material for molded resin articles is provided, which comprises a plastic raw material and a filler used for molded resin articles, wherein a powder obtained by pulverizing waste fiberglass reinforced plastic molded articles is mixed as the filler into said plastic raw material at a concentration of from 10% to 50% by weight. A molded resin article with excellent properties can be formed using the material. According to the present invention, it is possible to provide a molded resin article which effectively utilizes natural resources and does not require any special waste disposal treatment.

## Description

### BACKGROUND OF THE INVENTION

### 1. Field of the Invention

The present invention relates to a material for molded resin articles, wherein a powder obtained by pulverizing waste fiberglass-reinforced plastic molded articles is mixed into a plastic raw material, in a specified amount, so that it can be subjected to the resin molding. It also relates to a molded resin article using the material.

### 2. Description of the Related Art

In general, fiberglass reinforced plastics (FRP), which are light weight and have excellent strength, can be used for molding articles of various shapes, and have features including little deterioration with age, excellent electrical and thermal characteristics, as well as their favorable physical characteristics such as touch and gloss. By virtue of these characteristics, they are frequently utilized in the fields for manufacturing molded resin articles.

Furthermore, FRP having such features are subjected to laminate molding methods, press molding methods, or other molding methods for forming various molded resin articles.

Hereupon, the molding methods above will be explained briefly. First, the above laminate molding methods include a hand lay-up method, a resin injection method, a spray-up method, and various packing methods.

The above press molding methods include a wet method and a dry method. The wet methods include a mat-matched metal die method, a preform-matched metal die method, and a cold press method. The dry method includes a sheet molding compound (SMC) method and a bulk molding compound (BMC) method.

The other molding methods above include a filament winding method, a continuous laminating molding method, a pultrusion molding method, and a rotational molding method.

The various molding methods described above have advantages as well as disadvantages. Accordingly, method selection is made depending on the molded resin articles to be manufactured.

Next, the hand lay-up method above will be used as an example among the above various molding methods to explain the conventional art for forming molded resin articles.

First, a mold releasing agent is applied to a P-mold (Step 1).

Next, a filler is mixed into an unsaturated polyester resin raw material to prepare a resin for gel coat layers. This resin for the gel coat layers is mixed with a curing agent to make a mixed resin formulation. Then, this mixed resin formulation is applied to the P-mold (Step 2).

After the gel coat layer is cured, the above-described mixed resin formulation is applied to the gel coat layer again, and glass mats are laminated by impregnating them with a conventional backing resin (Step 3).

In the course of curing of the resin in Step 3, or after the curing, a chopped formulation is applied to the mating margin from the back side for lamination when the front and the back sides of the P-mold are mated with each other for adhesion (Step 4).

When the resin applied in Step 4 has been cured, the molded article is taken out of the P-mold and the flashes around the mating areas are trimmed off, and sand paper or the like is applied there for chamfering (Step 5).

Then, the outer surface of the molded resin article is sanded with sand paper or the like, and the mold releasing agent on the surface of the molded resin article is removed (Step 6).

The molded article is then subjected to various finishing steps to produce a finished molded resin product.

Recently, there have been many instances in which such FRP molded products were discarded as wastes. However, since such waste FRP molded products have the above-described features, they keep their properties for a long time after being discarded. Thus, FRP molded articles require special waste disposal treatment, which creates disadvantages to their use as listed below:
(1) They require special waste disposal treatment facilities which are costly to construct, and operation and maintenance of the waste disposal treatment facilities require care, time, and further costs.
(2) There is a possibility that poisonous materials or the like are generated in the course of the waste disposal treatment.
(3) They use up valuable underground resources.

### SUMMARY OF THE INVENTION

Accordingly, it is an object of the present invention to provide a material for molded resin articles which overcomes the above disadvantages, makes it possible to effectively utilize natural resources, and requires no special waste disposal treatment, as well as to provide a molded resin article using the material.

For achieving the above object, the material for molded resin articles according to a first aspect of the present invention is a material for molded resin articles, comprising a plastic raw material and a filler used for molded resin articles, wherein a powder obtained by pulverizing waste fiberglass reinforced plastic molded articles is mixed, as the filler, into the above plastic raw material at a concentration of from 10% to 50% by weight.

According to the above first aspect of the present invention, it is only necessary to crush and pulverize fiberglass reinforced plastic (FRP) molded articles which are to be discarded as wastes, for forming a powder, and therefore no special waste disposal treatment facilities are required. Furthermore, molded articles can be repeatedly utilized as a powder. Thus, saving of natural resources can be achieved.

For achieving the above object, the molded resin article according to a second aspect of the present invention is a molded resin article molded from a material comprising a plastic raw material and a filler, wherein a powder obtained by pulverizing waste fiberglass reinforced plastic molded articles is mixed, as the filler, into the above plastic raw material at a concentration of from 10% to 50% by weight to form a mixture and the mixture is subjected to molding for providing a specific shape to the molded resin article.

According to the above second aspect of the present invention, fiberglass reinforced plastic (FRP) molded articles which are to be discarded as wastes, are simply crushed and pulverized into a powder for manufacturing molded resin articles using the powder as a filler, and therefore no special waste disposal treatment facilities are required. Furthermore, waste molded articles can be repeatedly pulverized into a powder for manufacturing molded resin articles using the powder as a filler. Thus, saving of natural resources can be achieved.

Preferably, in the molded resin article according to the second aspect of the present invention, a powder obtained by pulverizing waste fiberglass reinforced plastic molded articles is mixed, as a filler, into the above plastic raw material at a concentration of from 10% to 50% by weight to form a mixture and the mixture is subjected to molding with specific molds for providing various shapes to the molded resin article.

### BRIEF DESCRIPTION OF THE DRAWING

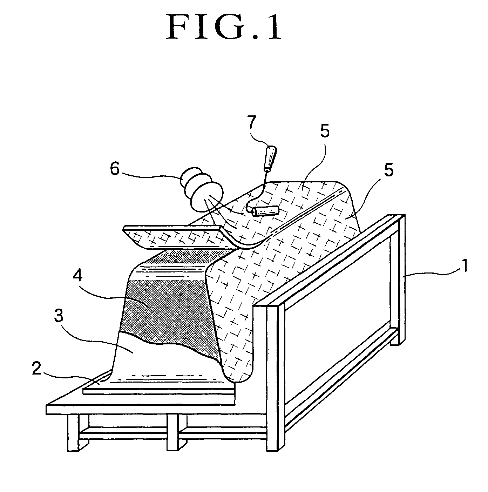

Fig. 1 is a schematic view showing a molded resin article and a manufacturing method therefor according to an embodiment of the present invention.

### DESCRIPTION OF THE PREFERRED EMBODIMENT

Embodiment of the present invention will be explained below, using the drawing.

Fig. 1 shows a molded resin article and a manufacturing method therefor according to an embodiment of the present invention. In Fig. 1, reference numeral 1 refers to a working table. On the working table 1, a P-mold 2 is placed. The P-mold 2 is formed to a desired shape. Hereinafter, the hand lay-up method is used as an example to explain the steps for manufacturing a molded resin article by one of the laminate molding methods.

First, a mold releasing agent is applied to the P-mold 2 (Step 1). A mold releasing agent-treated layer 3 is formed by this procedure on the surface of the P-mold 2.

Next, a gel coat layer 4 is formed (Step 2). For example, 30% to 35% by weight, preferably about 33% by weight of a powder obtained by crushing and pulverizing waste FRP molded articles (referred to as an "FRP recycled powder" hereinafter) as a filler is mixed with a plastic raw material comprising 50% to 60% by weight of an unsaturated polyester resin, and 50% to 40% by weight of styrene. A mixed resin formulation is formed by mixing a curing agent into this mixture. This mixed resin formulation is applied to the surface of the mold releasing agent-treated layer 3. The gel coat layer 4 is formed by this procedure.

Furthermore, when the gel coat layer 4 described above is cured, the above mixed resin formulation is applied to the surface of the gel coat layer 4 again, and glass mats 5 are laminated on the gel coat layer 4 by impregnating them with a backing resin supplied from a resin supply bucket 6, using a roller 7 or the like (Step 3). The backing resin used here is a mixed formulation in which a conventional unsaturated polyester resin is mixed with 8% to 12% by weight, preferably about 10% by weight, of an FRP recycled powder.

Next, in the course of curing of the backing resin impregnated onto the glass mats 5, or after the curing, a chopped formulation is applied to the mating area for lining, when the front and the back sides of the P-mold 2 are mated with each other for adhesion (Step 4). Hereupon, the chopped formulation is a mixed formulation obtained by mixing 35% to 40% by weight, preferably about 37% by weight, of the FRP recycled powder with the unsaturated polyester resin.

After the chopped formulation is cured, the molded resin article is demolded from the P-mold and the flashes around the mating areas are trimmed off, and chamfering is performed with sand paper or the like (Step 5).

Next, the outer surface of the molded resin article is sanded with sand paper or the like to remove the mold releasing agent from the surface of the molded resin article (Step 6).

Lastly, the molded resin article is subjected to various finishing steps so as to provide a finished molded resin product and thus the finished molded resin product is manufactured in this way.

The strength of the finished molded resin product, molded using the mixed formulation into which the FRP recycled powder was mixed, was examined together with that of a conventional molded resin article, molded using a conventional mixed formulation without the FRP recycled powder.

This examination was entrusted to the Saitama Prefectural Industrial Technology Center. The examination was performed using specimens from both of the above molded resin articles according to an "Izod impact testing method for rigid plastics."

According to the Izod impact test, one end of a specimen was fixed to an Izod impact tester at a point where a notch was made, and the surface of a part of the specimen was subjected to one strike of a hammer to be break the specimen, in which the struck part was on the other end of the specimen and was 22 mm away from the notch, and the struck surface was on the same side of the specimen as where the notch was situated. The impact value was determined by this procedure. This impact test is one type of impact bending test. It measures the energy required to break the specimen with one strike of a hammer so as to obtain various data such as impact resistance, brittleness, and tenacity of the rigid plastic material.

According to the test result report from the Saitama Prefectural Industrial Technology Center, the finished molded resin product using the FRP recycled powder showed an Izod impact value of 58 kJm⁻², while the conventional product showed an Izod impact value of 26.8 kJm⁻², indicating that the finished molded resin product, using the FRP recycled powder, had a strength more than twice as large as that of the conventional product.

On the other hand, the material for molded resin articles used in manufacturing the molded resin article using the above FRP recycled powder is used as a mixed resin formulation for gel coat layers and as a chopped formulation.

This mixed resin formulation is prepared by mixing 33% to 35% by weight of the FRP recycled powder, obtained by crushing and pulverizing waste FRP molded articles, as a filler with an unsaturated polyester resin, followed by mixing with a curing agent.

Here, the chopped formulation is the mixed formulation obtained by mixing the unsaturated polyester resin with 37% by weight of an FRP recycled powder.

According to the present invention, the material for molded resin articles is used as the mixed formulation for forming gel coat layers in which the unsaturated polyester resin is mixed with 33% to 35% by weight of the FRP recycled powder, and is also used as a mixed formulation for a chopped formulation in which the unsaturated polyester resin is mixed with 36% to 38% by weight of the FRP recycled powder, and therefore it is possible to greatly decrease the amounts of talc, Aerosil® , Carplex® , calcium carbonate, etc. used as conventional fillers. Furthermore, no new fillers are required, making it possible to save natural resources.

Furthermore, since FRP molded articles which have been discarded as wastes are used for recycling in the embodiment according to the present invention, no special waste disposal treatment facilities will be necessary, thus avoiding construction costs, operation costs, and maintenance costs of the facilities. The present invention also requires no energy consumption for the operation of waste disposal treatment facilities, resulting in energy saving.

Furthermore, when the FRP recycled powder is used for gel coat layers in the embodiment according to the present invention, sanding works (polishing works) other than deflashing are not required, further facilitating energy saving.

In addition to the above-described merits, all of the products as well as the FRP layers, flashes, and redundant resins of the molded resin articles which are generated in the course of manufacturing the molded resin articles can be used again as an FRP recycled powder as described in the embodiment according to the present invention. Accordingly, it is not necessary to discard wastes, which have been subjected to waste disposal treatment, as refuse, thus preventing excessive use of natural resources.

Also in the embodiment according to the present invention, since part of the unsaturated polyester resin for gel coat layers is replaced with an FRP recycled powder, 10% to 50% by weight of the unsaturated polyester resin can be saved.

Furthermore, in the embodiment according to the present invention, only very small amounts of new fillers are used, because the amounts of new fillers can be reduced greatly by using the FRP recycled powder.

Furthermore, in the embodiment according to the present invention, molded resin articles obtained by molding using the FRP recycled powder have strengths more than twice as large as those of conventional molded resin articles.

Here, the FRP recycled powder is obtained as follows. FRP molded articles such as discarded FRP bath tubs are cracked with a pretreatment machine, residues are removed from them, magnetic materials are removed with a magnetic separator, a uniaxial crusher is used for crushing, and a crushed material is stored in an intermediate hopper. The crushed material is taken out of the intermediate hopper and subjected to a pulverizing machine to obtain a fine powder, and the fine powder is passed through a filter cyclone, followed by treatment with a vibrating screen to sort according to the weight so as to provide a plural types of the FRP recycled powders. Different types of FRP recycled powders are used to suit different requirements.

In the above embodiment, explanations of the manufacturing processes for the molded resin article have been made based on the hand lay-up method. However, the present invention is neither limited by, nor limited to this, and naturally, other molding methods can be applied.

Hereupon, to explain the other production processes, the FRP recycled powder is mixed as a filler into the above plastic raw material at a concentration of from 10% to 50% by weight, for example. Then, molded resin articles having various shapes can be formed by means of the various molding methods other than the above-described hand lay-up method, including, for example, the other types of the laminate molding methods, the press molding method, and the other molding methods which are not classified as belonging to the above two molding methods, using this mixture, and using molds for use in the respective molding methods.

Molded resin articles having various shapes which are molded according to these molding methods, enumerated include not only dummies, but also bath tubs, various containers, small-sized boats, prefabricated housing parts, protective boards, and molded articles having other shapes.

Although the molding methods belonging to the above classification have been explained in the foregoing, they will be explained again below.
(1) Of the hand lay-up method, the resin injection method, the spray-up method, and the various packing methods included in the "laminate molding method", explanations will be made briefly on the representative molding methods below.
   In the "spray-up method", chopped glass strands obtained by chopping glass roving continuously to a size of 25 mm are sprayed together with the resin on to an open mold which has been subjected to the mold releasing treatment, and, as necessary, subjected to gel coating. A roller or the like is used to press the chopped glass strands for impregnation, for defoaming, and for lamination.
   The "packing methods" include a vacuum packing method and a pressure packing method, etc.
   In the vacuum packing method, after the hand lay-up treatment using an open mold, the surrounding areas of the laminate-molded body are cleaned, a hermetic seal is applied, and the laminate-molded body is covered with a film which is connected to a vacuum pump. Then, the inside of the film is evacuated for molding.
   In the pressure packing method which is a type of compression molding using an open mold and a pressure bag, a preform made of a reinforcing agent is placed in a cavity mold, a compound is supplied on to the preform, and is molded by pressurizing the pressure bag with pressurized air.
(2) The above "press molding methods" include a wet method and a dry method. The wet methods include a mat-matched metal die method, a preform-matched metal die method, and a cold press method. The dry method includes a BMC method and an SMC method.
   To explain the cold press method as a representative of the wet method, a preform is set in a mold, and a compound is applied to it. Then the mold is closed by the pressure of a press, and the molding is carried out.
   A BMC is explained as a representative of the dry method. Chopped strands having a size of about 1 mm are blended with a resin, a curing agent, a filler, a colorant, etc. in a kneader. The kneader is placed in a container and is heated for about one whole day to obtain a BMC. After that, a specific amount of the BMC is placed in a mold. Then, the mold is closed by the pressure of a press and the molding is accordingly performed.
(3) The above "other molding methods" include a filament winding method, a continuous laminating molding method, a pultrusion method, and a rotational molding method.

A filament winding method is explained as a representative of these other molding methods. This is a molding method in which glass roving continuously impregnated with a resin in a resin container is wound around a uniformly rotating mold at a specific angle to the rotational axis while applying a tension until a specific thickness is realized, it is then cured, and is removed from the mold and is subjected to trimming to provide the molded resin article.

As described above, molded resin articles having various shapes can be obtained by applying various molding methods.

### EXAMPLE

Comparisons will be made between the cases in which materials for the resin molding according to the present invention are used, and the cases in which conventional materials for resin molding are used.

Table 1 shows the materials for the resin molding and mats necessary for manufacturing a dummy according to a conventional method as well as materials for the resin molding and mats necessary for manufacturing a dummy as described in the example according to the present invention, respectively.

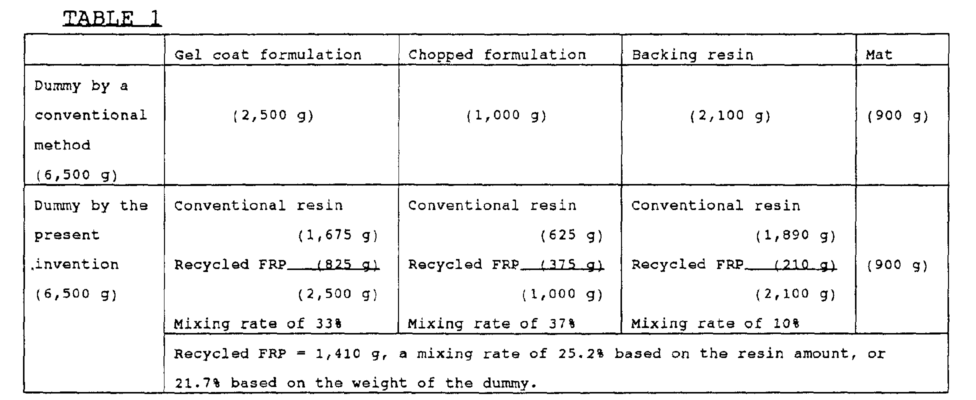

In Table 1, the dummy according to the conventional method requires, as the gel coat formulation, a material consisting of an unsaturated polyester resin and fillers such as talc, Aerosil®, Carplex®, and calcium carbonate, in a total amount of 2,500 g. In comparison, the dummy as described in the example according to the present invention uses a gel coat formulation which contains 1,675 g of the unsaturated polyester resin and 825 g of the FRP recycled powder in a total amount of 2,500 g. The mixing rate is 33% by weight.

In Table 1, the dummy according to the conventional method requires, as the chopped formulation, a material consisting of the unsaturated polyester resin and fillers such as talc, Aerosil®, Carplex®, and calcium carbonate, at a concentration larger than that of the fillers for the gel coat formulation. The amount is 1,000 g. In comparison, the dummy as described in the example according to the present invention uses a chopped formulation which contains 625 g of the unsaturated polyester resin and 375 g of the FRP recycled powder in a total amount of 1,000 g. The mixing rate is 37% by weight.

In Table 1, the dummy according to the conventional method requires, as the backing resin, a material consisting of the unsaturated polyester resin and fillers in a total amount of 2,100 g. In comparison, the dummy as described in the example according to the present invention uses a backing resin which contains 1,890 g of the unsaturated polyester resin and 210 g of the FRP recycled powder in a total amount of 2,100 g. The mixing rate is 10% by weight.

It is noted that both of the mats for the dummy according to the conventional method and the mats for the dummy as described in the example according to the present invention weigh 900 g.

Accordingly, for the dummy as described in the example according to the present invention, a total amount of 1,410 g of the FRP recycled powder is used, and therefore the mixing rate of the FRP recycled powder amounts to 25.2% by weight based on the total resin amount, and to 21.7% by weight based on the weight of the dummy. By virtue of this, the amounts of natural resources used will be reduced, while recycling of them is realized.

Table 2 shows materials for the resin molding and mats necessary for manufacturing a body according to a conventional method as well as the materials for the resin molding and mats necessary for manufacturing a body as described in the example according to the present invention, respectively.

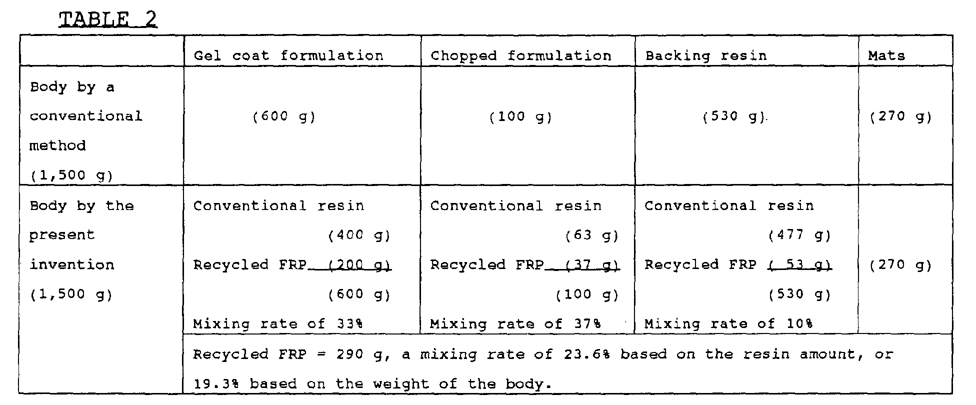

In Table 2, the body according to the conventional method requires, as the gel coat formulation, a material consisting of an unsaturated polyester resin and fillers such as talc, Aerosil® , Carplex® , and calcium carbonate, in a total amount of 600 g. In comparison, the body as described in the example according to the present invention uses a gel coat formulation which contains 400 g of the unsaturated polyester resin and 200 g of the FRP recycled powder in a total amount of 600 g. The mixing rate is 33% by weight.

In Table 2, the body according to the conventional method requires, as the chopped formulation, a material containing the unsaturated polyester resin and fillers at a concentration larger than that of the fillers for the gel coat formulation. The amount required is 100 g. In comparison, the body as described in the example according to the present invention uses a chopped formulation which contains 63 g of the unsaturated polyester resin and 37 g of the FRP recycled powder in a total amount of 100 g. The mixing rate is 37% by weight.

In Table 2, the body according to the conventional method requires, as the backing resin, a material consisting of the unsaturated polyester resin and fillers in a total amount of 530 g. In comparison, the body as described in the example according to the present invention uses a backing resin which contains 477 g of the unsaturated polyester resin and 53 g of the FRP recycled powder in a total amount of 530 g. The mixing rate is 10% by weight.

It is noted that both of the mats for the body according to the conventional method and the mats for the body as described in the example according to the present invention weigh 270 g.

Accordingly, for the body as described in the example according to the present invention, a total amount of 290 g of the FRP recycled powder is used, and therefore the mixing rate of the FRP recycled powder amounts to 23.6% by weight based on the total resin amount, and to 19.3% by weight based on the weight of the body. By virtue of this, the amounts of natural resources used will be reduced, while recycling of them is realized.

Table 3 shows a material for molded resin articles necessary for manufacturing a pour-molded article according to a conventional method and the material for molded resin articles necessary for manufacturing a pour-molded article as described in the example according to the present invention, respectively.

**TABLE 3**

| | |
|---|---|
| Molded article by a conventional pour molding | A conventional resin 100% |
| Molded article by the pour-molding according to the present invention | A conventional resin 50% A recycled FRP 50% |
| | A recycled FRP = 50% (mixing rate) based on the weight of the molded article |

In Table 3, the molded article which is pour-molded according to the conventional method requires a material consisting of the unsaturated polyester resin and fillers such as talc, Aerosil® , Carplex® , and calcium carbonate, in a total amount of, for example, 100 g. In comparison, the pour-molded article as described in the example according to the present invention consists of, for example, 50 g of the unsaturated polyester resin and 50 g of the FRP recycled powder in a total amount of 100 g. The mixing rate is 50% by weight.

Accordingly, for the pour-molded article as described in the example according to the present invention, the FRP recycled powder is used at a mixing rate of 50% by weight based on the weight of the molded article. By virtue of this, the amounts of natural resources used will be reduced, while recycling of them is realized.

In this way, when a molded resin article is manufactured as described in the example according to the present invention, the FRP recycled powder can be used for mixing at a concentration of from 10% to 50% by weight corresponding to the types of molded resin articles to be manufactured.

As explained above, since the present invention makes it possible to use a mixed formulation in which the FRP recycled powder is mixed with the unsaturated polyester resin at a concentration of from 10% to 50% by weight, corresponding to the types of molded resin articles to be manufactured, it is possible to greatly reduce the amounts of talc, Aerosil® , Carplex® , calcium carbonate, etc. which are conventionally used as fillers. Furthermore, saving of natural resources can be realized since no new fillers are required.

Furthermore, according to the present invention, since FRP molded articles which have been discarded as wastes are reutilized, no special waste disposal treatment facilities will be necessary, thus avoiding construction costs, operation costs, and maintenance costs of the facilities. The present invention also requires no energy consumption for the operation of waste disposal treatment facilities, resulting in energy saving.

Furthermore, when the FRP recycled powder is used for gel coat layers according to the present invention, sanding works other than deflashing are not required, further facilitating energy saving.

In addition to the above-described merits, since all of the finished molded resin products as well as the FRP layers, flashes, and redundant resins which are generated in the course of manufacturing molded resin articles can be used again as the FRP recycled powder according to the present invention, it is possible to reutilize wastes which have been conventionally subjected to waste disposal treatment, as refuse, thus preventing excessive use of natural resources.

Also according to the present invention, since steps for polishing the molded resin articles other than deflashing of them are redundant, time required for obtaining the finished molded resin product is reduced by the amount of time required for the steps, with the result that energy saving can be realized.

## Claims

1. A material for molded resin articles comprising:
a plastic raw material and a filler used for molded resin articles,
wherein a powder obtained by pulverizing waste fiberglass reinforced plastic molded articles is mixed as the filler into said plastic raw material at a concentration of from 10% to 50% by weight.

2. A molded resin article molded from a material comprising:
a plastic raw material and a filler,
wherein a powder obtained by pulverizing waste fiberglass reinforced plastic molded articles is mixed as the filler into said plastic raw material at a concentration of from 10% to 50% by weight to form a mixture, and said mixture is subjected to molding for providing a specific shape to the molded resin article.

3. A molded resin article according to Claim 2, wherein a powder obtained by pulverizing waste fiberglass reinforced plastic molded articles is mixed as the filler into said plastic raw material at a concentration of from 10% to 50% by weight to form a mixture, and said mixture is subjected to molding with specific molds for providing various shapes to the molded resin article.
